# EUROPEAN PATENT SPECIFICATION

(11) **EP 2 042 837 B1**
(45) Date of publication and mention of the grant of the patent: **08.01.2020**
(21) Application number: 07117213.4
(22) Date of filing: 26.09.2007
(51) Int. Cl.: G01D 4/00, G01D 18/00, G01F 15/06, G01R 22/06, G01K 1/02

(54) **Meter device for communicating on a communication line**
Messgerät zur Kommunikation über eine Kommunikationsleitung
Dispositif de compteur pour communiquer sur une ligne de communication

(43) Date of publication of application: 01.04.2009
(73) Proprietor: KAMSTRUP A/S, 8660 Skanderborg (DK)
(72) Inventor: Drachmann, Jens, 8260 Viby J (DK); Nielsen, Søren Tønnes, 8355 Solbjerg (DK)
(74) Representative: Plougmann Vingtoft a/s

(56) References cited:
- WO-A1-02/099360
- CA-A1- 2 349 380
- US-A- 4 328 494
- US-A- 5 252 967
- US-A1- 2005 246 123

## Description

### Field of the invention

The invention relates to the field of meter devices, especially to the field of electronic meter devices, more specifically to the field of meter devices for consumption metering purposes.

### Background of the invention

Heat meter systems with a heat calculator connected to a flow meter and two temperature sensors are well-known. According to standardized methods, a flow meter normally sends a train of pulses representing a measured flow rate, e.g. one pulse pr. 0.1 litre of liquid etc. This quantity signal can be sent using a one-wire connection between flow meter and heat calculator.

However, additional functionalities in intelligent meter systems can profit from an additional communication between the heat calculator and the flow meter, e.g. 2-way communication. Examples of additional data that can be sent from the flow meter to the heat calculator are: 1) a temperature derived by or directly measured by the flow meter, 2) an error status of the flow meter, 3) different internal parameters and variables of the flow meter, and 4) an identification code of the flow meter to be used for self-configuration. Examples of data that can be sent from the heat calculator to the flow meter are: 1) configuration data (such as volume per pulse), 2) a cut-off command, and 3) adjustment data for adjustment or calibration of the flow meter.

Preferably, such additional communication between flow meter and heat calculator can be performed automatically, e.g. controlled by the heat calculator, without the need for any manual actions by an operator. Further, in order to lower manufacturing costs and the probability of installation errors, it is desired that such extra communication can be performed without the need for any additional wiring between flow meter and heat calculator.

According to prior art systems, extra wiring is necessary to be able to communicate with the meter device, such as request additional data. It is a disadvantage with such systems that the extra wiring causes the meter device and connected devices to become complex and expensive to manufacture, and further they are complicated to install, thereby leading to a high number of expensive installation errors. Trouble shooting can be made by connecting a computer to the flow meter with a dedicated connector in order to have access to e.g. error status and internal parameters of the flow meter, and possibly also change settings of the flow meter.

According to other prior art systems, communication with the meter device is made possible using existing wiring between meter device and calculator unit by an operator operating a switch or other kind of connection on the flow meter.

US 4,328,494 discloses a device arranged to measure a physical quantity, the device including a signal generator arranged to send a quantity signal according to the measured physical quantity on a communication line, a request detector arranged to detect a request signal on the communication line, the quantity signal being sent on the communication line, the communication line being a one-wire electric connection, where the signal generator is interconnected with the request detector so as to stop sending the quantity signal on the communication line upon detection of the request signal, and where the meter device is arranged for additional communication (transmission of a calibration response) on the communication line after having stopped sending the quantity signal.

Other similar systems are known from US 5,252,967, US 2005/0246123 A1, WO 02/099360 A1 and CA 2 349 380A1.

### Summary of the invention

According to the above, it is an object of the invention to provide a meter device, e.g. a flow meter, capable of communicating additional data on existing communication lines, i.e. data apart from the primary physical quantity data measured by the meter. The meter device must be able to communicate the additional data without manual interaction by an operator.

According to a first aspect, a meter device is arranged to measure a physical quantity, the meter device including:
- a signal generator arranged to send a quantity signal according to the measured physical quantity on a communication line, and
- a request detector arranged to detect a request signal on the communication line, such as a request signals from an associated external unit,
wherein the signal generator is interconnected with the detector so as to stop sending the quantity signal upon detection of the request signal.

Such meter device is advantageous for a number of metering systems, e.g. where it is desired to communicate extra data between the meter device and a calculator unit. The meter is suitable for systems where first communication line is a one-wire connection, such as in existing heat meter systems where a single wire interconnect a flow meter and a heat calculator. Since the meter device can stop sending the physical quantity signal, e.g. flow rate signal, the communication line is cleared for alternative communication between the meter device and external unit such as a heat calculator.

The meter device can switch between two modes of operation, namely:
1) a detection mode where a continuous quantity signal is sent while detecting for a request signal from an external device, and
2) a communication mode where the quantity signal has been stopped and the meter device is prepared for 2-way communication with the external device that sent the request signal.

In this way it is possible for an external device to request e.g. additional data, such as error status data, temperature data, calibration and/or configuration data, internal parameters and/or variable etc. from the meter device without requiring any manual action on the meter device by an operator. Thus, in meter systems arranged for wireless reading, e.g. heat meters or electric energy meters, where 2-way communication with a calculator unit of the meter system is already implemented, it becomes possible e.g. to inspect status also in meter device(s) connected to the calculator unit. The external device is also able to send data, such as configuration data (such as volume per pulse), a cut-off command, and adjustment data for adjustment or calibration of the flow meter, to the meter.

The request signal may have different forms. In preferred embodiments, the meter device is arranged to detect a request signal being a signal with a constant level of a predetermined duration, preferably such that the predetermined duration being such that it exceeds a duration of a quantity signal pulse sent by the meter device, such as a predetermined duration being more than twice the duration of the quantity signal pulse duration. Hereby the meter device is able to detect the request signal also in case it is sent simultaneously with sending a quantity signal pulse on the communication line. However, the request signal may alternatively be a series of very short pulses closely spaced in time, such as that the pulses can easily be discriminated from quantity signal pulses sent by the meter device.

The additional communication with the meter device may include data to or from the flow meter than should normally not be available by unauthorized persons. E.g. the additional communication may include configuration or calibration commands such as a command causing the meter device to change its quantity signal pulse rate, or such as a command changing an internal calibration coefficient in the meter device, or such as a cut-off command causing the meter device to simply abort measuring. Thus, it may be preferred to provide a restriction to at least some of the commands or data requests accepted by the meter device. Such restriction may be implemented by a software code or a password protection to be sent via the communication line CL in case such restricted communication is intended. Such code or password protection may be implemented according to techniques known by the skilled person.

Alternatively or additionally, a restriction may be implemented in hardware, such as requiring a manual interaction to switch the meter device to a "restricted communication mode". This may be implemented as a user operable switch or jumper hidden behind a lid or the like, such that it is not possible to gain access to the switch or jumper without breaking a certification seal. The switch or jumper function may alternatively be obtained by short circuiting two hidden electrical terminals, thereby enabling "restricted communication mode". Still further, access to the "restricted communication mode" may be accessed via a wireless receiver in the meter device that can receive a wireless key signal from a dedicated wireless key device, e.g. based on bluetooth technology.

The communication line is a one-wire communication line. One-wire embodiments are suitable for modification of existing meter devices since 2-way communication becomes possible without any change in the existing physical interconnection of meter device and associated equipment. However, electric interface of the meter device and associated equipment must be suited for the expanded communication possibilities, as will be described later. Further, the processor controlling the function of the meter device must of course be suited for the desired type of communication.

The meter device may be a flow meter, e.g. an ultrasonic flow meter, an electric energy meter, or a meter device arranged for other types of measurements involving physical quantity data and communication of such data.

Further embodiments are defined in the appended dependent claims.

In a second aspect, the invention provides a meter system including
- a meter device according to the first aspect, and
- a calculator unit arranged for connection to the first communication line so as to be able to receive the quantity signal, the calculator unit further being arranged for sending a request signal on the communication line.

### Brief description of the drawings

In the following selected embodiments of the invention will be described in more details with reference to the appended drawings in which
Figs. 1 illustrates prior art communication between a flow meter and a heat calculator unit,
Fig. 2 illustrates in schematic form a meter device embodiment,
Fig. 3 illustrates an example of communication signal timing between a meter device and an external device,
Figs. 4a and 4b illustrate an implementation of the invention, and
Figs. 5a and 5b illustrate another implementation of the invention.

### Detailed description of the invention

Even though the invention will be described in the following referring specifically to a meter device being a flow meter forming part of a heat meter, it is appreciated that the principles described below apply as well for any meter device, e.g. a meter device of an electric energy meter system etc.

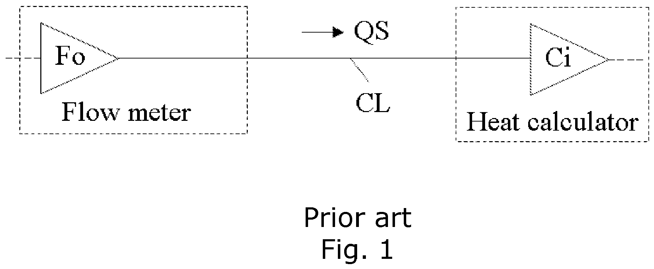

Fig. 1 illustrates prior art one-way communication between output of a flow meter and input of a heat calculator. The flow meter includes a pulse generator Fo arranged to generate a quantity signal QS in the form of a pulse train representing a measured liquid flow rate. The calculator includes a calculator input Ci arranged to receive pulse from the flow meter. The pulse generator Fo is connected to the calculator input Ci by a one-wire communication line CL. The pulse generator Fo can then generate pulses by switching the potential on the communication line CL, such as by switching between electrical ground and a fixed voltage potential.

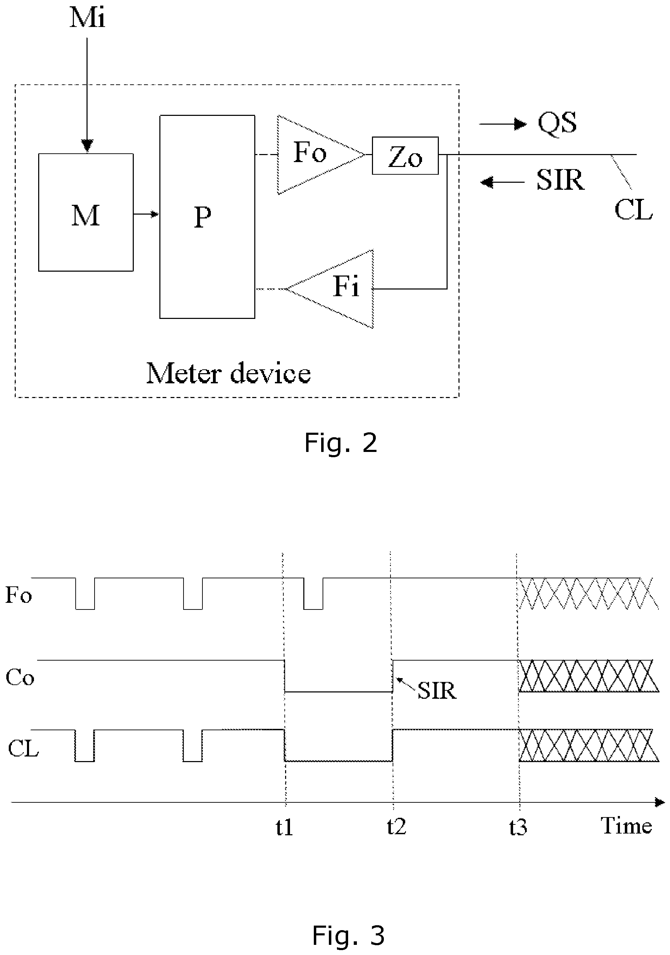

Fig. 2 illustrates a meter device embodiment according to the invention, e.g. a flow meter, an electric energy meter etc. The meter device has a measurement unit M arranged to receive a measurement input Mi and perform a measurement thereon. The measurement unit M is connected to a processor P that receives data from the measurement unit M and calculates based thereon a value representing a physical quantity reflecting the measurement input Mi. Data representing the physical quantity is communicated, via a one-wire communication line CL, as a quantity signal QS, e.g. in the form of a pulse train such as according to known standards for meter devices. The meter device further includes a request detector Fi connected to the communication line CL and arranged to detect a request signal SIR received via the communication line CL. Thus, the quantity signal generator Fo must be capable of accepting an external device sending a signal on the communication line CL at the same time it sends the quantity signal QS. Thus, the quantity signal generator Fo is connected to the communication line CL via a current limiting resistor Zo. In response to a detected request signal SIR, the meter device stops sending the quantity signal QS, and the meter device is thereby prepared for utilizing the communication line CL for additional communication with the external device that sent the request signal SIR. The processor P serves to the control the overall operation of the meter device, and thus the processor P is connected to receive a signal, e.g. an interrupt, from the request detector Fi so as to be able to change mode of operation and stop the signal generator Fo in generating the quantity signal QS.

In principle, the additional communication may be any two-way communication between the meter device and e.g. a calculator unit. In simple embodiments, the meter device is configured to send one type of data in response to the SIR signal, e.g. status data or a liquid temperature measured by the meter device in case it is a flow meter. In other embodiments, the calculator unit may use the SIR signal merely to cause the meter device to clear the communication line CL and then send a command or specific request in the additional communication part. In still other embodiments, the additional communication may include a configuration request from the calculator unit requesting e.g. calibration data from the flow meter in order to enable the calculator to adjust its calculation algorithm to an unknown meter device connected thereto. E.g. a flow meter may respond to the request by sending data representing e.g. which liquid quantity pr. pulse is represented in its quantity signal QS. Additionally, the meter device receives data, such as a configuration command, this command informing the meter device which quantity signal is expected from the calculator unit, so as to enable the meter device to configure its quantity signal QS accordingly, configuration data and/or adjustment data, and/or a cut-off command.

The additional communication can be terminated in several ways. E.g. the meter device may be programmed to re-enter the normal pulse generation mode after expiration of a predetermined timeout period. Alternatively, the calculator unit may send a command to cause the meter device to re-enter normal pulse generation mode. Still further, the meter device can have a mode control by means of a knob or switch arranged for manual selection of mode of operation. During the additional communication period, the calculator unit loses track on the measured quantity, e.g. liquid flow, since the quantity signal in this period is interrupted. Thus, it is advantageous that the meter device is arranged to store data representing the quantity measured in this period, and then send data representing this quantity, e.g. liquid volume, as a quantity data signal, thereby enabling the calculator unit to calculate the correct physical quantity taking into account also the quantity corresponding to the period where the normal quantity signal QS has been stopped. This quantity data signal can be sent by the meter device in several ways, either as sending data representing a single value automatically upon re-entering normal quantity signal mode, or upon specific request by the calculator unit. Further, the quantity data signal can be communicated by sending extra pulses corresponding to the number of pulses that would have been sent without the interruption caused by the SIR signal and the subsequent additional communication.

Fig. 3 illustrates an example of a possible communication scheme between a meter device and a calculator unit, i.e. signal levels versus time, between a pulse generator Fo of the meter device and a request generator Co of a calculator unit interconnected by a communication line CL. Up to time t1 the pulse generator Fo of the meter device generates pulses on the communication line CL. Between time t1 and t2 the request generator Co of the calculator drags the communication line CL to a constant low level. If the period between t1 and t2 is longer than a predetermined period, this is detected by the meter device, as a request signal SIR. In the same period, between t1 and t2, the pulse generator Fo output tries to send a quantity signal pulse on the communication line CL. However, upon detection of the request signal SIR, the meter device stops the pulse generator Fo in sending further quantity pulses. Thus, the SIR signal has caused the meter device to change its mode of operation, since it has stopped sending its quantity signal and entered a communication mode, e.g. a mode in which it is capable of communicating according to normal serial communication schemes on the communication line CL. This additional communication is indicated in Fig. 3 to take place on the communication line CL after time t3.

In principle, the additional communication may be any two-way communication between flow meter and heat calculator. In simple embodiments, the flow meter is configured to send one type of data in response to the SIR signal, e.g. status data or a liquid temperature measured by the flow meter. In other embodiments, the heat calculator may use the SIR signal merely to cause the flow meter to clear the communication line CL and then send a command or specific request in the additional communication part.

The additional communication part can be terminated in several ways. E.g. flow meter may be programmed to re-enter the normal pulse generation mode after expiration of a predetermined timeout period. Alternatively, the heat calculator may send a command to cause the flow meter to re-enter normal pulse generation mode. Still further, the flow meter can have a mode control by means of a knob or switch arranged for manual selection of mode of operation.

During the additional communication period, the heat calculator loses track on the liquid flow rate since the flow rate signal is stopped. Thus, it is advantageous that the flow meter is arranged to send data representing the amount of liquid volume measured in the period where the flow rate signal has been stopped, thereby enabling the heat calculator to calculate the correct amount of heat. This extra liquid volume can be sent by the flow meter in several ways, either as date representing a single value automatically upon re-entering normal pulse more, or upon specific request by the heat calculator. Further, the extra liquid volume can be communicated by sending extra pulses corresponding to the number of pulses that would have been sent without the interruption caused by the SIR signal and subsequent additional communication.

The timing scheme in Fig. 3 is illustrated for one choice of digital levels, however it is appreciated that the principles apply as well. E.g. the request signal SIR may be communicated by a high level (digital '1') instead of a low level (digital '0') as illustrated.

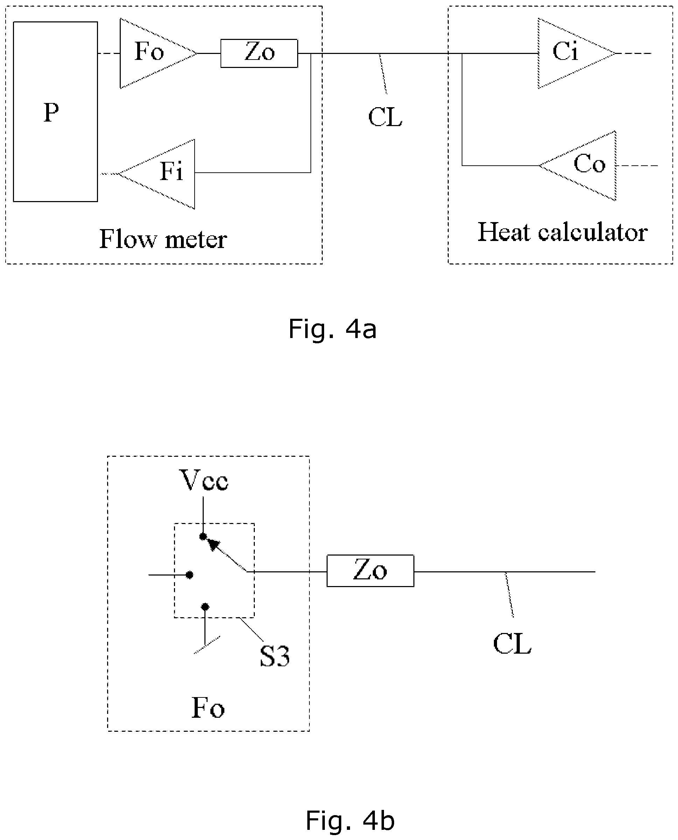

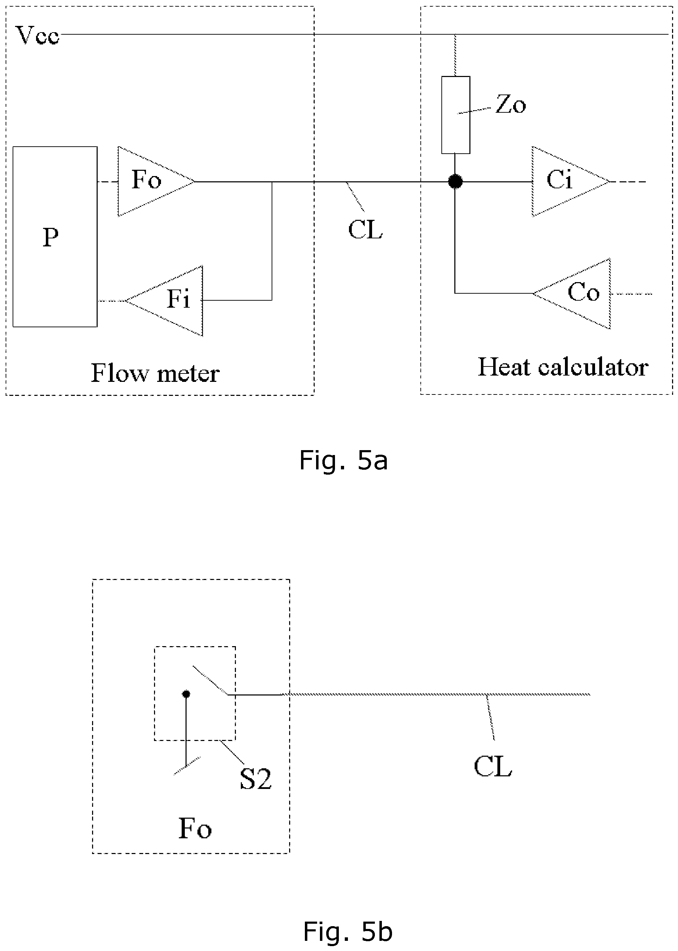

Figs. 4 and 5 illustrate two possible implementations of a flow meter and associated heat calculator interconnected with a one-wire communication line CL. For a more general description of the meter device function, see the above description of Fig. 2 in which the same reference signs are used.

For clarity reasons, only parts of the flow meter and heat calculator related to contact with the communication line CL are shown in Figs. 4 and 5. Other parts of the flow meter and heat calculator can be implemented such as known in the art, e.g. the flow meter may be an ultrasonic flow meter. One common feature distinguishes both of the flow meter embodiments illustrated in Figs. 4 and 5 from prior art, namely the presence of a request detector Fi arranged to detect a request signal SIR on the communication line CL sent by a request generator Co in the heat calculator.

The request detector Fi may be a simple sensor circuit connected to the communication line CL, as illustrated, and arranged to generate an interrupt signal to an internal processor in the flow meter upon detection of a request signal SIR on the communication line CL. The processor can then change its mode of operation in response to the interrupt, i.e. stop sending flow rate pulses on the communication line CL, and e.g. prepare for receiving further communication from the heat calculator. E.g. the processor can receive the further communication via the request detector circuit Fi, or it can be connected to receive data from the communication line CL via other interface circuits.

In Fig. 4a signal generator Fo for generating a quantity signal QS is connected to the communication line CL via an impedance Zo, e.g. a current limiting resistor. As illustrated in Fig. 4b, the signal generator Fo may be implemented by an electronic three-state switch S3 arranged to operationally connect the communication line CL to one of: 1) electrical ground, 2) a voltage potential Vcc, and 3) not connected (or floating). Thus, by switching switch S3 between state 1) and state 2), the signal generator Fo can generate pulses on the communication line CL. When the request generator Co of the heat calculator has generated a request signal SIR, and this request signal SIR has been detected by the request detector Fi, the signal generator Fo can switch the three-state switch S3 to state 3), i.e. not connected, and thus allow an external unit to determine the signal on the communication line CL. Since the signal generator Fo is connected to the communication line CL via the impedance Zo, while the request detector Fi is connected to the communication line CL directly, it is possible for an external unit to generate the request signal SIR, e.g. a constant high or constant low signal without any short circuiting problems. It is appreciated that the three-state switch may be implemented using a logic buffer/gate, such as using BJT or FET discrete components or elements of integrated circuits.

In Fig. 5a the signal generator Fo and request detector Fi are both directly connected to the communication line CL, while the communication line CL is connected to a constant voltage Vcc via an impedance Zo, e.g. a current limiting resistor. As shown in Fig. 5b, the signal generator Fo generator for this configuration can be arranged to generate the quantity signal QS by operating an electronic two-state switch S2 connected between electric ground and the communication line CL. Hereby the communication line CL is dragged to electric ground, or low, when the two-state switch S2 is closed, while the communication line CL is dragged to high via Zo when the two-state S2 switch is open. When the request generator Co of the heat calculator drags the communication line CL to electric ground, the communication line CL will remain in low state in spite the position of the two-state switch S2 of the signal generator Fo. Thus, in this way a simple request signal SIR can be detected by the request detector Fi. It is appreciated that the two-state switch may be implemented using an open collector logic buffer/gate, such as using BJT or FET discrete components or elements of integrated circuits.

It is appreciated that it is an easy task for the skilled person to select suitable circuit elements that can fulfil the function principles described in connection with Figs. 3 and 4. Either a practical implementation may use discrete components or integrated circuits, or combinations thereof. Further, it may be chosen to implement more or less of the communication scheme as software in the main processor controlling the meter device, while the remaining part of the scheme is handled in communication line interface circuits. Thus, in general the request detector Fi and its interconnection with the signal generator can be implemented in hardware, at least partly software, firmware or any combination of these.

To sum up, the invention provides a meter device, e.g. a flow meter, including a signal generator for sending a quantity signal, e.g. a pulse signal, according to the measured physical quantity on a communication line, e.g. a one-wire connection. The meter device further has a request detector for detecting a request signal on the communication line, such as a request signals from an associated external unit. The signal generator and the detector are interconnected so that the signal generator stops sending the quantity signal when the request signal has been detected. The meter device is arranged for additional communication, 2-way communication between the meter device and a calculator unit, after having stopped sending the quantity signal. Such additional data may be temperature data from a flow meter to a heat calculator, or configuration data sent from the heat calculator to the flow meter. Restart of sending the quantity signal can be initiated by request via the communication line, or initiated by the meter device itself after expiration of a predetermined time. In some embodiments, the signal generator generates the quantity signal by operating an electronic two-state switch connected between electric ground and the communication line, e.g. with the communication line connected to a voltage potential via an impedance. In other embodiments, the signal generator includes a three-state switch for connecting the communication line to one of: 1) electrical ground, 2) a voltage potential, and 3) high impedance, such as open circuit. The three-state switch may be connected to the communication line via an impedance. Although the present invention has been described in connection with the specified embodiments, it should not be construed as being in any way limited to the presented examples. The scope of the present invention is to be interpreted in the light of the accompanying claim set.

## Claims

1. Meter device arranged to measure a physical quantity, the meter device including:
- a signal generator (Fo) arranged to send a quantity signal (QS) according to the measured physical quantity on a communication line (CL), and
- a request detector (Fi) arranged to detect a request signal (SIR) on the communication line (CL),
wherein the communication line (CL) is a one-wire electric connection, wherein the quantity signal is continuously send on the communication line, wherein the signal generator (Fo) is interconnected with the request detector (Fi) so as to stop sending the quantity signal (QS) on the communication line upon detection of the request signal (SIR), and wherein the meter device is arranged for additional communication, whereby data, such as configuration data, a cut-off command and/or adjustment data, are received or sent by the meter on the communication line after having stopped sending the quantity signal.

2. Meter device according to any of the preceding claims, wherein the quantity signal (QS) is a pulse train in which each pulse represents a physical quantity.

3. Meter device according to claim 1 or 2, wherein the meter device is a calibrated meter device arranged for certified metering purposes.

4. Meter device according to any of the preceding claims, wherein the meter device is further arranged to generate an additional data signal on the communication line (CL) after having stopped sending the quantity signal (QS).

5. Meter device according to claim 4, wherein the additional data signal represents one of: a) a second physical quantity measured by the meter device, such as a temperature, and b) an error status in the meter device.

6. Meter device according to any of the preceding claims, wherein the meter device is arranged to detect a request signal (SIR) being a signal with a constant level of a predetermined duration.

7. Meter device according to claim 6, wherein the predetermined duration of the request signal (SIR) exceeds a duration of the quantity signal pulse (QS) sent by the meter device.

8. Meter device according to any of the preceding claims, wherein the meter device is further arranged to restart sending the quantity signal (QS) after having stopped sending the quantity signal (QS).

9. Meter device according to claim 8, wherein the meter device is arranged to restart sending the quantity signal (QS) upon one of: a) expiration of a predetermined timeout period, and b) detection of a request on the first communication line.

10. Meter device according to any of claims 8 or 9, wherein the meter device is arranged to store data representing a measured physical quantity between stop and restart of sending the quantity signal (QS), the meter device further being arranged to send a quantity data signal representing the measured physical quantity between stop and restart of sending the quantity signal (QS).

11. Meter device according to any of the preceding claims, wherein the signal generator (Fo) is arranged to generate the quantity signal (QS) by operating an electronic two-state switch operationally connected between electric ground and the communication line (CL).

12. Meter device according to claim 11, wherein the communication line (CL) is connected to a voltage potential (Vcc) via an impedance (Zo).

13. Meter device according to any of claims 1 to 10, wherein the signal generator (Fo) includes an electronic three-state switch arranged to operationally connect the communication line (CL) to one of: 1) electrical ground, 2) a voltage potential (Vcc), and 3) high impedance, such as open circuit.

14. Meter device according to claim 13, wherein the three-state switch is connected to the communication line (CL) via an impedance (Zo).

15. Meter device according to any of the preceding claims, further including a processor (P) operationally connected to the signal generator (Fo) and the request detector (Fi).

16. Meter device according to claim 15, wherein the processor (P) is programmed to change mode of operation in response to detecting the request signal (SIR).

17. Meter device according to any of the preceding claims, wherein the meter device is a flow meter, wherein the physical quantity is a liquid flow rate, and wherein the quantity signal (QS) is a train of pulses representing a flow rate.

18. Meter device according to any of claims 1 to 16, wherein the meter device is an electric energy meter, wherein the physical quantity is electric energy, and wherein the quantity signal (QS) is a train of pulses representing an electric energy rate.

19. Meter system including
- a meter device according to any of the claims 1 to 18, and
- a calculator unit arranged for connection to the first communication line (CL) so as to be able to receive the quantity signal (QS), the calculator unit further being arranged for sending the request signal (SIR) on the communication line (CL).

## Patentansprüche

1. Messgerät, das angeordnet ist, um eine physikalische Größe zu messen, wobei die Messgerät Folgendes beinhaltet:
- einen Signalgenerator (Fo), der angeordnet ist, um ein Größensignal (QS) gemäß der gemessenen physikalischen Größe auf einer Kommunikationsleitung (CL) zu senden, und
- einen Anforderungsdetektor (Fi), der angeordnet ist, um ein Anforderungssignal (SIR) auf der Kommunikationsleitung (CL) zu erfassen,
wobei die Kommunikationsleitung (CL) eine elektrische Verbindung mit einem Draht ist, wobei das Größensignal durchgehend auf der Kommunikationsleitung gesendet wird, wobei der Signalgenerator (Fo) mit dem Anforderungsdetektor (Fi) verbunden ist, um das Senden des Größensignals (QS) auf der Kommunikationsleitung bei Erfassung des Anforderungssignals (SIR) zu stoppen, und wobei das Messgerät für eine zusätzliche Kommunikation angeordnet ist, durch die Daten, wie etwa Konfigurationsdaten, Abschaltbefehls- und/oder Einstellungsdaten, durch den Messer auf der Kommunikationsleitung empfangen oder gesendet werden, nachdem das Senden des Größensignals gestoppt wurde.

2. Messgerät nach einem der vorangehenden Ansprüche, wobei das Größensignal (QS) eine Impulsfolge ist, bei der jeder Impuls eine physikalische Größe darstellt.

3. Messgerät nach Anspruch 1 oder 2, wobei das Messgerät ein kalibriertes Messgerät ist, das für zertifizierte Messungszwecke angeordnet ist.

4. Messgerät nach einem der vorangehenden Ansprüche, wobei das Messgerät ferner angeordnet ist, um ein zusätzliches Datensignal auf der Kommunikationsleitung (CL) zu generieren, nachdem das Senden des Größensignals (QS) gestoppt wurde.

5. Messgerät nach Anspruch 4, wobei das zusätzliche Datensignal eines von Folgenden darstellt: a) eine zweite physische Größe, die durch das Messgerät gemessen wurde, wie etwa eine Temperatur, und b) einen Fehlerzustand in dem Messgerät.

6. Messgerät nach einem der vorangehenden Ansprüche, wobei das Messgerät angeordnet ist, um ein Anforderungssignal (SIR) zu erfassen, bei dem es sich um ein Signal mit einem konstanten Niveau einer vorbestimmten Dauer handelt.

7. Messgerät nach Anspruch 6, wobei die vorbestimmte Dauer des Anforderungssignals (SIR) eine Dauer des Größensignalsimpulses (QS) überschreitet, der durch das Messgerät gesendet wurde.

8. Messgerät nach einem der vorangehenden Ansprüche, wobei das Messgerät ferner angeordnet ist, um mit dem Senden des Größensignals (QS) fortzufahren, nachdem das Senden des Größensignals (QS) gestoppt wurde.

9. Messgerät nach Anspruch 8, wobei das Messgerät angeordnet ist, um mit dem Senden des Größensignals (QS) bei einem der Folgenden fortzufahren: a) einem Ablauf eines vorbestimmten Timeout-Zeitraums und B) einer Erfassung einer Anforderung auf der ersten Kommunikationsleitung.

10. Messgerät nach einem der Ansprüche 8 oder 9, wobei das Messgerät angeordnet ist, um zwischen dem Stoppen des Sendens des Größensignals (QS) und dem Fortfahren damit Daten zu speichern, die eine gemessene physikalische Größe darstellen, wobei das Messgerät ferner angeordnet ist, um ein Größendatensignal zu senden, das die gemessene physikalische Größe zwischen dem Stoppen des Sendens des Größensignals (QS) und dem Fortfahren damit darstellt.

11. Messgerät nach einem der vorangehenden Ansprüche, wobei der Signalgenerator (Fo) angeordnet ist, um das Größensignal (QS) durch Betreiben eines elektronischen Schalters mit zwei Zuständen zu generieren, der zwischen einer elektrischen Masse und der Kommunikationsleitung (CL) wirkverbunden ist.

12. Messgerät nach Anspruch 11, wobei die Kommunikationsleitung (CL) über eine Impedanz (Zo) mit einem Spannungspotential (Vcc) verbunden ist.

13. Messgerät nach einem der Ansprüche 1 bis 10, wobei der Signalgenerator (Fo) einen elektronischen Schalter mit drei Zuständen beinhaltet, der angeordnet ist, um die Kommunikationsleitung (CL) mit einem von Folgenden wirkzuverbinden: 1) einer elektrischen Masse, 2) einem Spannungspotential (Vcc) und 3) einer hohen Impedanz, wie etwa einem offenen Schaltkreis.

14. Messgerät nach Anspruch 13, wobei der Schalter mit drei Zuständen über eine Impedanz (Zo) mit der Kommunikationsleitung (CL) verbunden ist.

15. Messgerät nach einem der vorangehenden Ansprüche, ferner beinhaltend einen Prozessor (P), der mit dem Signalgenerator (Fo) und dem Anforderungsdetektor (Fi) wirkverbunden ist.

16. Messgerät nach Anspruch 15, wobei der Prozessor (P) programmiert, um als Reaktion auf das Erfassen des Anforderungssignals (SIR) einen Betriebsmodus zu ändern.

17. Messgerät nach einem der vorangehenden Ansprüche, wobei das Messgerät ein Durchflussmesser ist, wobei die physische Größe eine Flüssigkeitsströmungsrate ist und wobei das Größensignal (QS) eine Impulsfolge ist, die eine Strömungsrate darstellt.

18. Messgerät nach einem der Ansprüche 1 bis 16, wobei das Messgerät ein elektrisches Energiemessgerät ist, wobei die physische Größe elektrische Energie ist und wobei das Größensignal (QS) eine Impulsfolge ist, die eine elektrische Energierate darstellt.

19. Messsystem, beinhaltend:
- ein Messgerät nach einem der Ansprüche 1 bis 18 und
- eine Recheneinheit, die zur Verbindung mit der ersten Kommunikationsleitung (CL) angeordnet ist, um in der Lage zu sein, das Größensignal (QS) zu empfangen, wobei die Recheneinheit ferner zum Senden des Anforderungssignals (SIR) auf der Kommunikationsleitung (CL) angeordnet ist.

## Revendications

1. Dispositif de compteur agencé pour mesurer une quantité physique, ledit dispositif de compteur comprenant :
- un générateur de signal (Fo) agencé pour envoyer un signal de quantité (QS) selon la quantité physique mesurée sur une ligne de communication (CL), et
- un détecteur de demande (Fi) agencé pour détecter un signal de demande (SIR) sur la ligne de communication (CL),
ladite ligne de communication (CL) étant une connexion électrique à un seul fil, ledit signal de quantité étant envoyé en continu sur la ligne de communication, ledit générateur de signal (Fo) étant interconnecté avec le détecteur de demande (Fi) de façon à arrêter l'envoi du signal de quantité (QS) sur la ligne de communication lors de la détection du signal de demande (SIR) et ledit dispositif de compteur étant agencé pour une communication supplémentaire, moyennant quoi des données, telles que des données de configuration, des données de commande de coupure et/ou de réglage, sont reçues par le compteur sur la ligne de communication après avoir arrêté l'envoi du signal de quantité.

2. Dispositif de compteur selon l'une quelconque des revendications précédentes, ledit signal de quantité (QS) étant un train d'impulsions dans lequel chaque impulsion représente une quantité physique.

3. Dispositif de compteur selon la revendication 1 ou 2, ledit dispositif de compteur étant un dispositif de compteur étalonné agencé à fins de comptage certifiées.

4. Dispositif de compteur selon l'une quelconque des revendications précédentes, ledit dispositif de compteur étant en outre agencé pour générer un signal de données supplémentaire sur la ligne de communication (CL) après avoir arrêté l'envoi du signal de quantité (QS).

5. Dispositif de compteur selon la revendication 4, ledit signal de données supplémentaire représentant l'un de : a) une seconde quantité physique mesurée par le dispositif de compteur, telle qu'une température, et b) un état d'erreur dans le dispositif de compteur.

6. Dispositif de compteur selon l'une quelconque des revendications précédentes, ledit dispositif de compteur étant agencé pour détecter un signal de demande (SIR) qui est un signal qui possède un niveau constant d'une durée prédéfinie.

7. Dispositif de compteur selon la revendication 6, ladite durée prédéfinie du signal de demande (SIR) dépassant une durée de l'impulsion de signal de quantité (QS) envoyée par le dispositif de compteur.

8. Dispositif de compteur selon l'une quelconque des revendications précédentes, ledit dispositif de compteur étant en outre agencé pour reprendre l'envoi du signal de quantité (QS) après avoir arrêté l'envoi du signal de quantité (QS).

9. Dispositif de compteur selon la revendication 8, ledit dispositif de compteur étant agencé pour reprendre l'envoi du signal de quantité (QS) lors de : a) l'expiration d'une période de temporisation prédéfinie et b) la détection d'une demande sur la première ligne de communication.

10. Dispositif de compteur selon l'une quelconque des revendications 8 ou 9, ledit dispositif de compteur étant agencé pour stocker des données représentant une quantité physique mesurée entre l'arrêt et la reprise de l'envoi du signal de quantité (QS), ledit dispositif de compteur étant en outre agencé pour envoyer un signal de données de quantité représentant la quantité physique mesurée entre l'arrêt et la reprise de l'envoi du signal de quantité (QS).

11. Dispositif de compteur selon l'une quelconque des revendications précédentes, ledit générateur de signal (Fo) étant agencé pour générer le signal de quantité (QS) en actionnant un commutateur électronique à deux états connecté de manière fonctionnelle entre la masse électrique et la ligne de communication (CL).

12. Dispositif de compteur selon la revendication 11, ladite ligne de communication (CL) étant connectée à un potentiel de tension (Vcc) par l'intermédiaire d'une impédance (Zo).

13. Dispositif de compteur selon l'une quelconque des revendications 1 à 10, ledit générateur de signal (Fo) comprenant un commutateur électronique à trois états agencé pour connecter de manière fonctionnelle la ligne de communication (CL) à l'un de : 1) la masse électrique, 2) un potentiel de tension (Vcc) et 3) une impédance élevée, telle qu'un circuit ouvert.

14. Dispositif de compteur selon la revendication 13, ledit commutateur à trois états étant connecté à la ligne de communication (CL) par l'intermédiaire d'une impédance (Zo).

15. Dispositif de compteur selon l'une quelconque des revendications précédentes, comprenant en outre un processeur (P) connecté de manière fonctionnelle au générateur de signal (Fo) et au détecteur de demande (Fi).

16. Dispositif de compteur selon la revendication 15, ledit processeur (P) étant programmé pour changer de mode de fonctionnement en réponse à la détection du signal de demande (SIR).

17. Dispositif de compteur selon l'une quelconque des revendications précédentes, ledit dispositif de compteur étant un débitmètre, ladite quantité physique étant un débit de liquide et ledit signal de quantité (QS) est un train d'impulsions représentant un débit.

18. Dispositif de compteur selon l'une quelconque des revendications 1 à 16, ledit dispositif de compteur étant un compteur d'énergie électrique, ladite quantité physique étant l'énergie électrique et ledit signal de quantité (QS) étant un train d'impulsions représentant un taux d'énergie électrique.

19. Système de compteur comprenant
- un dispositif de compteur selon l'une quelconque des revendications 1 à 18, et
- une unité de calcul agencée pour être connectée à la première ligne de communication (CL) de façon à pouvoir recevoir le signal de quantité (QS), ladite unité de calcul étant en outre agencée pour envoyer le signal de demande (SIR) sur la ligne de communication (CL).
